# EUROPÄISCHE PATENTSCHRIFT

(11) **EP 2 492 114 B1**
(45) Veröffentlichungstag und Bekanntmachung des Hinweises auf die Patenterteilung: **22.01.2014**
(21) Anmeldenummer: 12154158.5
(22) Anmeldetag: 07.02.2012
(51) Int. Cl.: B60C 1/00, C08K 3/08, C08L 21/00, B60C 9/18, B60C 23/19

(54) **Fahrzeugluftreifen**
Pneumatic tyres for a vehicle
Pneus de véhicule

(30) Priorität: 28.02.2011 DE 102011000966
(43) Veröffentlichungstag der Anmeldung: 29.08.2012
(73) Patentinhaber: Continental Reifen Deutschland GmbH, 30165 Hannover (DE)
(72) Erfinder: Jeromin, Dieter, 30419 Hannover (DE)
(74) Vertreter: Finger, Karsten

(56) Entgegenhaltungen:
- EP-A2- 1 031 441
- DE-A1-102007 049 872
- JP-A- 2006 076 414

## Beschreibung

Die Erfindung betrifft einen Fahrzeugluftreifen in radialer Bauart mit in radialer Richtung verlaufenden Festigkeitsträgern.

Die Haltbarkeit von Fahrzeugluftreifen (im nachfolgenden auch schlicht als Reifen bezeichnet) mit Gürtellagen insbesondere aus Stahlkord ist naturgemäß begrenzt. Sofern der Reifen nicht während seiner Nutzungsdauer abgefahren wird oder durch von außen kommende Beschädigungen unbrauchbar gemacht wird, kommt es im Allgemeinen zum Versagen an strukturellen Bauteilen.

Dieses Versagen wird sehr häufig durch Schäden verursacht, die an den Gürtelkanten der Stahlgürtellagen entstehen. Dort kommt es zu Trennungen zwischen Gummi und den Stahlkordfilamenten. Diese Trennungen weiten sich immer weiter aus und führen letztlich zum Ausfall des Reifens.

Dieser Vorgang wird ausgelöst durch:
- Die naturgemäß starke Temperaturentwicklung im Bereich der Gürtelkanten, welche zu Alterung und thermischer Schädigung der dortigen Kautschukmischung führt.
- Eingebrachte mechanische Beanspruchung, da sich das Maximum der entstehenden Kräfte und der mechanischen Spannungen ebenfalls an den Gürtelkanten im Bereich der Kordenden konzentriert. Die dynamische Wechselbeanspruchung der dort vorhandenen Kautschukmischung führt zu einer Ermüdung der Mischung mit anschließendem Ausfall durch Bruch der Mischung oder durch thermisch bedingte Zersetzung der Mischung.

Die Aufgabe der vorliegenden Erfindung ist es daher, das Entstehen der oben genannten Schäden im Bereich der Gürtelkanten und / oder der Gürtellagen zu verhindern und damit die Haltbarkeit des Reifens zu verbessern. Der häufige Ausfall von Reifen an den Gürtelkanten bzw. Gürtellagen soll verhindert oder zumindest hinausgezögert werden. Diese Aufgabe wird dadurch gelöst, dass im Bereich der Gürtelkante und / oder der Gürtellagen des Reifens Metallpartikel eingebracht werden.

Der Reifen ist hierbei in radialer Bauart ausgestaltet und besitzt in radialer Richtung verlaufende Festigkeitsträger vorzugsweise aus Textilkord und / oder aus Stahlkord.

Das Einbringen im Bereich der Gürtelkante bedeutet:
- Dass die Metallpartikel sowohl lokal als auch rundführend eingebracht werden können und / oder
- dass die Metallpartikel über die gesamte Breite einer Gürtellage verteilt werden können und / oder
- dass die Metallpartikel über und / oder unterhalb der Gürtellage eingebracht werden können und / oder
- dass die Metallpartikel außerhalb der Gürtellagen, aber direkt angrenzend, eingebracht werden können und / oder
- dass die Metallpartikel auf oder innerhalb oder unterhalb eines Polsterstreifens zwischen zwei Gürtellagen ein- oder aufgebracht werden können.
- dass die Metallpartikel auf oder innerhalb des unter der untersten Gürtellage liegenden Bauteils ein- oder aufgebracht werden
- dass die Metallpartikel unter oder innerhalb des über der obersten Gürtelkante liegenden Bauteils ein- oder aufgebracht werden

Bei dem Polsterstreifen handelt es sich um einen Gummistreifen (Streifen aus Kautschukmischung), der sich zwischen zwei Gürtellagen an der Gürtelkante befindet.

Die Metallpartikel können direkt in die Kautschukmischung der Gürtellage und / oder in die Kautschukmischung der Polstermischung oder anderer unter oder über den Gürtellagen liegenden Bauteilen während des Mischvorgangs direkt eingemischt werden.

Ebenso können die Metallpartikel auch im Prozess des Beschichtens von Stahlcord mit der Kautschukmischung beigefügt werden.

Ebenso können die Metallpartikel auf die Polsterstreifenmischung und / oder die Gürtelmischung und/ oder die über oder unter der betreffenden Gürtellage liegenden

Bauteile manuell oder anderweitig im Rahmen der industriellen Fertigung (z.Bsp. durch eine geeignete Vorrichtung) aufgestreut werden.

Die Partikel bewirken eine Verbesserung der Wärmeleitfähigkeit, da Metall eine erheblich höhere Wärmeleitfähigkeit als Gummi hat. Daher kann sich die an den Gürtelkanten entstehende Wärme leichter verteilen und an unkritische Stellen im Reifen weitergeleitet werden.

Gleichzeitig wird eine bessere Verteilung der Kräfte, die sich an den Spitzen der Stahlkordfilamente und / oder der Textilkordfilamente der Gürtellage konzentrieren, erreicht. Diese Kräfte werden auf die im Vergleich zu der Kautschukmischung sehr steifen Metallpartikel weitergeleitet und können sich in einem größeren Volumenbereich verteilen, wodurch sie entsprechend abgeschwächt werden.

Aus EP1277874A1 und EP2266818A1 ist zwar bereits bekannt, dass sich die Haltbarkeit eines Reifens verbessern lässt, wenn den Kautschukmischungen der inneren Bauteile des Reifens organische Fasern zugemischt werden, welche mit Metall beschichtet sind. Hierbei wird die Wärmeleitfähigkeit allerdings lediglich durch die sehr dünne metallische Beschichtung der organischen Fasern erzielt, was vielfach nicht ausreichend ist. Gleichzeitig haben die organischen Fasern oft nicht die notwendige Steifigkeit, um Kraftspitzen, wie oben erwähnt, ableiten zu können. Dies ist auch deshalb der Fall, da diese mit Metall beschichteten Fasern nicht in allen Fällen eine Haftung zum umgebenden Gummi eingehen.

Die metallischen Partikel haben weiterhin den Vorteil, dass sie die elektrische Leitfähigkeit an der Gürtelkante bzw. der Gürtellagen signifikanter erhöhen können als dies mit metallisch beschichteten organischen Fasern möglich ist. Im Allgemeinen ist eine erhöhte Leitfähigkeit von Gummimischungen erwünscht, um elektrostatische Aufladungen während des Fahrbetriebes und dadurch bedingte Funkenüberschläge zu verhindern. Heutzutage werden aus unterschiedlichen Gründen Gummimischungen eingesetzt, die auf Grund ihres Füllstoffsystems nur eine schlechte elektrische Leitfähigkeit besitzen. Dieser Nachteil kann durch das Auf- oder Einbringen der genannten Metallpartikel aufgehoben werden.

Die verwendeten Metallpartikel können hierbei bevorzugt aus Stahl und / oder Kupfer und / oder Aluminium und / oder Messing und / oder Bronze und / oder Zink und /oder anderen Metallen und / oder anderen Metalllegierungen bestehen. Mischungen aus verschiedenartigen Metallpartikeln sind möglich.

Besonders geeignet sind Metalle oder Metalllegierungen, die selbst leitfähig sind.

Die Metallpartikel können isometrisch, planar oder prismatisch sein, wobei alle geometrischen Formen in Frage kommen. Gute Ergebnisse werden erzielt, wenn die Metallpartikel prismatisch ausgebildet waren und / oder wenn die Partikelgröße, bestimmt mit einfacher Lichtmikroskopie, zwischen 0,1 und 3 mm, bevorzugt zwischen 0,8 und 1,2 mm, jeweils in der längsten Achse, liegt.

Die Kautschukmischung der Gürtelkante, welche auch als Gürtelmischung bezeichnet wird, benötigt in der Regel ein geeignetes Haftsystem, da sonst keine ausreichende Haftung zwischen den Stahlkorden und der Kautschukmischung besteht. Hierzu enthält die Gürtelmischung Schwefel, mindestens einen geeigneten Beschleuniger, häufig Zinkoxid, Öle oder andere Weichmacher und zumeist wenigstens ein Harzsystem und als Polymer wenigstens einen Naturkautschuk, oft - aber nicht zwangsläufig - in Kombination mit Ruß als Füllstoff. Solche Haftmischungen zu vermessingtem Stahlkord sind der fachkundigen Person bekannt. Gleiches gilt für die Mischung des Polsterstreifens.

Zur weiteren Verbesserung der Wärmeleitfähigkeit und elektrischen Leitfähigkeit ist es möglich, dass die Metallpartikel beschichtet sind. Das Beschichtungsmaterial muss hierbei wärmeleitfähig sein, was insbesondere bei Metallpartikeln, die selbst eine eher geringe Wärmeleitfähigkeit aufweisen relevant ist. Gleichzeitig muss durch die Beschichtung eine gute Haftung zur Kautschukmischung der Gürtelkante und / oder der Gürtellagen gewährleistet werden.

Die Metallpartikel können vollständig oder nur teilweise mit der genannten Beschichtung versehen sein. Dies ist teilweise abhängig vom Material der Partikel. Die Beschichtung kann ein- oder mehrlagig ausgestaltet sein.

Durch die Beschichtung wird gleichzeitig eine Verbesserung hinsichtlich der dauerhaften Haftung an Gummi gewährleistet. Die Beschichtung und die Metallpartikel selbst können aus dem gleichen Material bestehen, müssen aber nicht.

Insbesondere Partikel mit einer Beschichtung aus Messing oder Zink haben hierbei den Vorteil, dass sie ohne weitere Behandlung bzw. Bearbeitung eine ausreichend gute Haftung zur Kautschukmischung der Gürtelkante gewährleisten können.

Als Material für die Beschichtung sind aus den obigen Gründen besonders Messing und Zink aber auch Kupfer und Bronze geeignet.

Die Beschichtung wird mit den der fachkundigen Person bekannten Beschichtungsverfahren aufgebracht, wobei die Dicke der Beschichtung bevorzugt 0,01 bis 1 µm (Mikrometer) beträgt

Es ist möglich, dass die genannten Metallpartikel, unbeschichtet, teilweise oder vollständig beschichtet, auch an anderen Stellen im Reifen eingebracht werden können. So zum Beispiel im Wulstbereich bei Reifen mit Stahlkarkasse und / oder Stahlkordwulstverstärkern, da dort zwischen den Stahlkordlagen ähnliche Bedingungen vorliegen wie an der Gürtelkante.

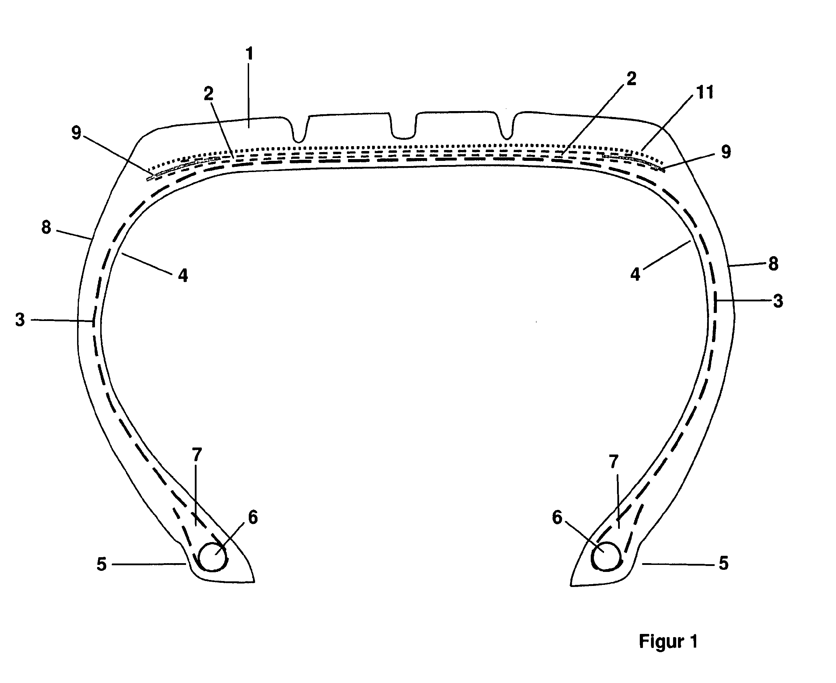

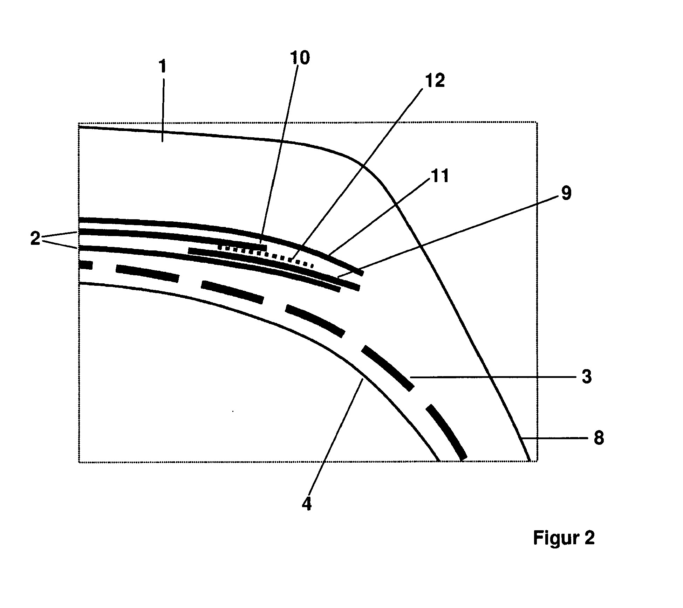

Die Erfindung wird nun anhand eines Ausführungsbeispiels und anhand der Figuren 1 bis 2 näher beschrieben.

### Ausführungsbeispiel:

Reifen erhältlich unter dem Handelsnamen Continental Vanco2 und mit der Größe 235/65 R 16C, LI:115, SS: R, wurden jeweils einem Haltbarkeitstest, siehe Tabelle 1, und einem Hochgeschwindigkeitstest, siehe Tabelle 2, unterzogen. Es handelt sich hierbei um Prüfstandversuche, bei der Reifen auf einer angetriebenen Prüftrommel abrollen.

Beim Haltbarkeitstest werden Reifen bei konstanter Geschwindigkeit bis zum Ausfall getestet, wobei der Ausfall zumeist im Bereich der Reifenschulter auftrat. Die Bewertung erfolgt durch den Vergleich mit einer Referenz. Der erfindungsgemäße Reifen unterscheidet sich nur durch das Vorhandensein von Metallpartikeln im Gürtellagenbereich von der Referenz. Die Anzahl der Stunden bis zum Ausfall wird gemessen. Eine höhere Stundenzahl im Vergleich zur Referenz gilt als Verbesserung.

Beim Hochgeschwindigkeitstest werden die Reifen bei stufenweise steigender Geschwindigkeit bis zum Ausfall getestet. Die Bewertung erfolgt durch ebenso durch den Vergleich mit einer Referenz. Der erfindungsgemäße Reifen unterscheidet sich nur durch das Vorhandensein von Metallpartikeln im Gürtellagenbereich von der Referenz. Die Zeit in Minuten bis zum Ausfall und die Geschwindigkeitsstufe wird registriert. Eine höhere Minutenzahl und/oder Geschwindigkeitsstufe gilt als Verbesserung.

Bei dem Reifen mit Metallpartikel wurde Stahlkord, welcher mit Messing beschichtet ist, auf Partikelgrößen zwischen 0,1 und 3 mm zerkleinert und manuell auf den Polsterstreifen, der als Entkopplungsstreifen zwischen der ersten und zweiten Stahlgürtellage dient, aufgestreut.

Die maximale Konzentration der Partikel befindet sich dabei unterhalb des Endes der zweiten Gürtellage, während sich die minimale Konzentration ausgehend von der Entfernung von der Kante der zweiten Gürtellage in beide Richtungen jeweils um die Hälfte der Entfernung von erster und zweiter Gürtellage befindet.

**Tabelle 1 Haltbarkeitsprüfung**

| | **Resultat in Stunden** |
|---|---|
| Referenz | 657 |
| Mit Metallpartikeln | 812 |

**Tabelle 2 Hochgeschwindigkeitsprüfung**

| | **Resultat** |
|---|---|
| Referenz | 4 min bei 210 km/h |
| Mit Metallpartikeln | 8 min bei 210 km/h |

Figur 1: Dargestellt ist ein Teilquerschnitt durch einen erfindungsgemäßen Fahrzeugluftreifen. Die Metallpartikel 12 werden bevorzugt oberhalb der Gummistreifens 9 zwischen den Stahlcord-Verstärkungslagen 2 und auch zwischen Polsterstreifen 9 und Bandage 11 eingebracht.

Figur 2: Dargestellt ist ein vergrößertes Detail des Gürtelkantenbereichs 10 aus Figur 1. Die Metallpartikel 12 werden bevorzugt oberhalb des Polsterstreifens 9 zwischen den Stahlcord-Verstärkungslagen 2 eingebracht, wobei ein Teil der Partikel 12 auch unterhalb der Bandage 11 zu liegen kommt.

### Bezugszeichenliste

### (Teil der Beschreibung)

- 1: Laufstreifen
- 2: Gürtel
- 3: Karkasse
- 4: Innenschicht
- 5: Wulstbereich
- 6: Wulstkern
- 7: Kernprofil
- 8: Seitenwand
- 9: Polsterstreifen (Gummistreifen),oberhalb dessen die Metallpartikel aufgebracht wurden
- 10: Gürtelkante
- 11: Bandage
- 12: Metallpartikel

## Patentansprüche

1. Fahrzeugluftreifen in radialer Bauart mit in radialer Richtung verlaufenden Festigkeitsträgern, **dadurch gekennzeichnet, dass** der Fahrzeugluftreifen im Bereich der Gürtelkanten (10) und / oder der Gürtellagen (2) Metallpartikel (12) enthält.

2. Fahrzeugluftreifen nach Anspruch 1, **dadurch gekennzeichnet, dass** es sich bei den Festigkeitsträgern um Festigkeitsträger aus Textilkord und / oder Stahlkord handelt.

3. Fahrzeugluftreifen nach Anspruch 1 oder 2, **dadurch gekennzeichnet, dass** sich die Metallpartikel (12) unmittelbar oberhalb und / oder unmittelbar unterhalb der Gürtelkanten (10) und / oder der Gürtellagen (2) befinden

4. Fahrzeugluftreifen nach einem der Ansprüche 1 bis 3, **dadurch gekennzeichnet, dass** die Metallpartikel (12) ausgewählt sind aus der Gruppe, bestehend aus Stahl und / oder Kupfer und / oder Aluminium und / oder Messing und / oder Bronze und / oder Zink.

5. Fahrzeugluftreifen nach einem der Ansprüche 1 bis 4, **dadurch gekennzeichnet, dass** die Metallpartikel (12) beschichtet sind.

6. Fahrzeugluftreifen nach Anspruch 5, **dadurch gekennzeichnet, dass** die Beschichtung der Metallpartikel (12) aus Messing und / oder Kupfer und / oder Bronze und / oder Zink besteht.

7. Fahrzeugluftreifen nach einem der Ansprüche 1 bis 6, **dadurch gekennzeichnet, dass** sich die Metallpartikel (12) im Fahrzeugluftreifen oberhalb der Gummistreifen (9) zwischen den Stahlkord-Verstärkungslagen (2) befinden.

8. Fahrzeugluftreifen nach einem der Ansprüche 1 bis 7, **dadurch gekennzeichnet, dass** die Metallpartikel (12) eine Partikelgröße zwischen 0,1 und 3mm haben.

9. Fahrzeugluftreifen nach einem der Ansprüche 1 bis 8, **dadurch gekennzeichnet, dass** die Metallpartikel (12) prismatisch ausgebildet sind.

## Claims

1. Pneumatic vehicle tyre of a radial type of construction, with reinforcing elements running in the radial direction, **characterized in that** the pneumatic vehicle tyre contains metal particles (12) in the region of the breaker belt edges (10) and/or the breaker belt plies (2).

2. Pneumatic vehicle tyre according to Claim 1, **characterized in that** the reinforcing elements are reinforcing elements of textile cord and/or steel cord.

3. Pneumatic vehicle tyre according to Claim 1 or 2, **characterized in that** the metal particles (12) are located directly above and/or directly below the breaker belt edges (10) and/or the breaker belt plies (2).

4. Pneumatic vehicle tyre according to one of Claims 1 to 3, **characterized in that** the metal particles (12) are selected from the group consisting of steel and/or copper and/or aluminium and/or brass and/or bronze and/or zinc.

5. Pneumatic vehicle tyre according to one of Claims 1 to 4, **characterized in that** the metal particles (12) are coated.

6. Pneumatic vehicle tyre according to Claim 5, **characterized in that** the coating of the metal particles (12) consists of brass and/or copper and/or bronze and/or zinc.

7. Pneumatic vehicle tyre according to one of Claims 1 to 6, **characterized in that** the metal particles (12) in the pneumatic vehicle tyre are located above the rubber strip (9) between the steel-cord reinforcing plies (2).

8. Pneumatic vehicle tyre according to one of Claims 1 to 7, **characterized in that** the metal particles (12) have a particle size of between 0.1 and 3 mm.

9. Pneumatic vehicle tyre according to one of Claims 1 to 8, **characterized in that** the metal particles (12) are prismatically formed.

## Revendications

1. Pneumatique de véhicule à structure radiale avec des éléments de résistance s'étendant en direction radiale, **caractérisé en ce que** le pneumatique de véhicule contient des particules de métal (12) dans la région des bords de nappes d'armature (10) et/ou des couches de nappes d'armature (2).

2. Pneumatique de véhicule selon la revendication 1, **caractérisé en ce que** les éléments de résistance sont des éléments de résistance en cordes textiles et/ou en cordes d'acier.

3. Pneumatique de véhicule selon la revendication 1 ou 2, **caractérisé en ce que** les particules de métal (12) se trouvent immédiatement au-dessus et/ou immédiatement en dessous des bords de nappes d'armature (10) et/ou des couches de nappes d'armature (2).

4. Pneumatique de véhicule selon l'une quelconque des revendications 1 à 3, **caractérisé en ce que** les particules de métal (12) sont choisies dans le groupe composé de l'acier et/ou du cuivre et/ou de l'aluminium et/ou du laiton et/ou du bronze et/ou du zinc.

5. Pneumatique de véhicule selon l'une quelconque des revendications 1 à 4, **caractérisé en ce que** les particules de métal (12) sont revêtues.

6. Pneumatique de véhicule selon la revendication 5, **caractérisé en ce que** le revêtement des particules de métal (12) se compose de laiton et/ou de cuivre et/ou de bronze et/ou de zinc.

7. Pneumatique dé véhicule selon l'une quelconque des revendications 1 à 6, **caractérisé en ce que** les particules de métal (12) se trouvent dans le pneumatique de véhicule au-dessus des bandes de gomme (9) entre les couches de renforcement en cordes d'acier (2).

8. Pneumatique de véhicule selon l'une quelconque des revendications 1 à 7, **caractérisé en ce que** les particules de métal (12) ont une taille de particule comprise entre 0,1 et 3 mm.

9. Pneumatique de véhicule selon l'une quelconque des revendications 1 à 8, **caractérisé en ce que** les particules de métal (12) sont de forme prismatique.
